# EUROPÄISCHE PATENTSCHRIFT

(11) **EP 2 385 911 B1**
(45) Veröffentlichungstag und Bekanntmachung des Hinweises auf die Patenterteilung: **08.01.2014**
(21) Anmeldenummer: 09760792.3
(22) Anmeldetag: 10.11.2009
(51) Int. Cl.: B60R 21/0132

(54) **VERFAHREN UND STEUERGERÄT ZUR ANPASSUNG EINER AUSLÖSEINFORMATION EINES RÜCKHALTESYSTEMS**
METHOD AND CONTROLLER FOR ADAPTING TRIGGER INFORMATION OF A RESTRAINT SYSTEM
PROCÉDÉ ET APPAREIL DE COMMANDE PERMETTANT D'ADAPTER UNE INFORMATION DE DÉCLENCHEMENT D'UN SYSTÈME DE RETENUE DES OCCUPANTS

(30) Priorität: 09.01.2009 DE 102009000122
(43) Veröffentlichungstag der Anmeldung: 16.11.2011
(73) Patentinhaber: Robert Bosch GmbH, 70442 Stuttgart (DE)
(72) Erfinder: LICH, Thomas, 71409 Schwaikheim (DE); KOLATSCHEK, Josef, 71263 Weil Der Stadt (DE)
(86) Internationale Anmeldenummer: PCT/EP2009/064909
(87) Internationale Veröffentlichungsnummer: WO 2010/078986

(56) Entgegenhaltungen:
- EP-A- 0 788 930
- EP-A- 0 909 681
- DE-A- 10 331 862
- DE-A-102006 055 008
- US-A1- 2004 117 086
- US-B2- 7 109 856

## Beschreibung

### Stand der Technik

Die vorliegende Erfindung bezieht sich auf ein Verfahren zur Anpassung einer Auslöseinformation eines Rückhaltesystems eines Fahrzeugs gemäß Anspruch 1, ein Steuergerät gemäß Anspruch 10, sowie ein Computerprogrammprodukt gemäß Anspruch 11.

### Offenbarung der Erfindung

Seit der Einführung der Fahrgastzelle hat sich die Fahrzeugsicherheit deutlich weiterentwickelt. Durch die aktive und passive Sicherheit konnten die Getöteten deutlich reduziert werden. Dabei kann ein Großteil auf Fahrzeug-Fahrzeug Frontkollisionen mit schwerem Verletzungsgrad bis hin zur Todesfolge zurückgeführt werden. Durch die Einführung von Verbraucherschutztests sowie Gesetzesanforderungen hinsichtlich Frontalkollisionen mit 100% bzw. 40% Überdeckung konnte eine wesentliche Verbesserung bei der Unfallfolgenminderung geleistet werden. Dadurch rücken jedoch andere Kollisionsarten und Themen in den Vordergrund. Eines dieser Themen ist der Partnerschutz und der Crashkompatibilität.

Im Zuge der Entwicklungen der passiven Sicherheit steht der Selbstschutz im Vordergrund. Dies ist die Eigenschaft des Fahrzeugs, seine eigenen Insassen sowohl in Fahrzeug-Fahrzeug-Kollisionen, als auch in Kollisionen mit anderen Objekten zu schützen.

Demgegenüber steht der Partnerschutz. Dies ist die Eigenschaft des Fahrzeugs, die Insassen des gegnerischen Fahrzeugs in einer Fahrzeug-Fahrzeug-Kollision zu schützen, also eine möglichst geringe Aggressivität zu haben.

Beide Eigenschaften werden in der Crashkompatibilität vereinigt. Diese Kombination bezeichnet ein hohes Maß an Selbstschutz bei niedriger Aggressivität gegenüber anderen Verkehrsteilnehmern in der Weise, dass das Gesamtrisiko in der Fahrzeugflotte minimiert wird. Es besteht allgemeine Einigkeit, dass eine Verbesserung der Kompatibilität nicht zu Lasten des Selbstschutzes einzelner Fahrzeuge gehen darf.

Es kann anhand von Unfalldaten gezeigt werden, dass heutige existierende Crashtests den Selbstschutz stark verbessert haben, jedoch bei leichter Abnahme des Partnerschutzes. Im Zuge dessen kann es zukünftig zu neuen Verbraucherschutztests für den Frontlastfall kommen, um hier die Kompatibilität stärker zu betrachten.

Um in der Praxis eine höhere Kompatibilität des Fahrzeugs zu erhalten, wird zukünftig in die Fahrzeugfrontstruktur eingegriffen. Dazu gibt es bereits Ansätze, bei denen im Fahrzeug verbauten Crashboxen adaptiert werden, um so eine verbesserte Energieabsorption zu gewährleisten.

Die EP 1 792 786 A2 beschreibt eine Crashbox der herkömmlichen Art. Dabei wird eine Crashbox zur Eingliederung zwischen dem Stoßfängerquerträger und einem Fahrzeuglängsträger eines Kraftfahrzeugs angeordnet.

In der Veröffentlichung "Entwicklung eines Frontendmoduls eines Niedrig-Energie Verbrauch-Fahrzeug" von M. Deimel, J. Franke und S. Löffler; 15. Symposium "Design for X"; Oktober 2004 wird eine adaptive Frontstruktur vorgeschlagen. Dabei sind zwei ausfahrbare Crash-Rohre durch einen breiten Querträger gekoppelt und zusätzlich mit einem Schaumelement versehen.

Für den Bereich adaptiver Frontstrukturen existieren bereits von der Firma Autoliv einige Ansätze und Ideen, die bereits prototypisch umgesetzt sind. Kern der Ideen ist dabei, die Steifigkeit der Crashboxen adaptiv zu gestalten. Die Crashboxen können dann vor, bzw. während der Kollision angepasst werden, so dass eine höhere Energieaufnahme der Frontstruktur stattfindet Dies bedeutet beispielsweise eine weiche Frontstruktur bei Intrusion eines Fußgängers oder aber auch eine härtere Frontstruktur bei Intrusion eines Fahrzeugs.

Eine Adaption oder Veränderung der Steifigkeit von Elementen im Front- und/oder, Heck- und/oder Seitenbereich des Fahrzeugs bewirkt bei einer Kollision eine Signaländerung im Schwerpunkt des Fahrzeugs. Die Signaländerung wirkt sich auch auf eine dort angeordnete Sensorik aus, die beispielhaft im Airbagsteuergerät verbaut ist. Die Signaländerung wirkt sich auch auf eine nicht im Schwerpunkt angeordnete Sensorik aus, die beispielhaft in einem Steuergerät zur Fahrdynamikregelung verbaut ist.

Durch die Veränderung der Steifigkeit der Strukturen wird sich somit eine zwangsläufige Änderung der im Crashfall gemessenen Beschleunigungs-, Druck- und/oder Körperschallsignale ergeben. Diese Auswirkung wird bisher bei der Auswertung von Sensorsignalen nicht berücksichtigt. Die Folge davon kann eine gegebenenfalls falsche Interpretation der Auslösealgorithmen und damit eine nicht rechtzeitige Zündung der Rückhaltemittel sein.

Aus der DE 103 31 862 A1 ist bekannt, ein Fahrzeugrahmenschutzelement zur Verwendung in einem Verfahren zur Ansteuerung eines Insassenschutzmittels. Das Fahrzeugrahmenschutzelement ist an einem Längs- oder Querträger eines Fahrzeugrahmens so angeordnet, dass es ab dem Einwirken einer Mindestkraft in Längsrichtung des jeweiligen Längs- bzw. Querträgers während eines Aufprallunfalls dauerhaft plastisch deformiert wird und dadurch dauerhafte Schäden vom Fahrzeugrahmen abhält. Durch das Fahrzeugrahmenschutzelement wird ein Hohlraum gebildet, in dem sich ein Drucksensor zur Messung des Druckanstiegs im Fahrzeugrahmenschutzelement während seiner dauerhaften plastischen Deformation befindet. Das auf diese Weise gewonnene Drucksignal ermöglicht es einem zentralen Steuergerät eines Insassenschutzsystems, die Schwere des vorliegenden Aufpralls zu ermitteln und entsprechend ein geeignetes Insassenschutzmittel gegebenenfalls modifiziert anzusteuern.

Vor diesem Hintergrund wird mit der vorliegenden Erfindung ein Verfahren zur Anpassung einer Auslöseinformation eines Rückhaltesystems eines Fahrzeugs, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass die Ansteuerung eines Rückhaltesystems eines Fahrzeugs verbessert werden kann, wenn bei der Ansteuerung eine Veränderung von Strukturelementen des Fahrzeugs berücksichtigt wird.

Erfindungsgemäß kann bei einer Anpassung, Adaption oder Veränderung der Steifigkeit wenigstens eines Strukturelements des Fahrzeugs eine Anpassung von Signalen von Sensoren durchgeführt werden, die in irgendeiner Art und Weise zur Auslösung von Rückhaltesystemen dienen können.

Insbesondere kann eine Anpassung einer Sensorik, von Signalen und/oder einer Signaldatenerfassung von Signalen eines Steuergerätes und/oder eines Auslösealgorithmus erfolgen. Bei dem Steuergerät kann es sich um das Airbagsteuergerät handeln. Die Anpassung kann bei Strukturanpassungen vor, während und nach einer (Primär)-Kollision durchgeführt werden. Eine Strukturanpassung ist dabei definiert als eine Anpassung von Elementen, die Einfluss auf einen Übertragungsweg zum Airbagsteuergerät bzw. einen direkten Einfluss auf die Entstehung von Crashsensorsignalen besitzen.

Vorteilhafterweise kann trotz des geänderten Übertragungsverhaltens der Fahrzeugstruktur eine gleich bleibende Auslösestrategie der Rückhaltemittel sichergestellt werden.

Ein weiterer Vorteil ist die sich erhöhende Robustheit des Auslösealgorithmus, da das Übertragungsverhalten der Struktur bereits im Auslösepfad berücksichtigt werden kann.

Ebenfalls ist es von Vorteil, dass das Verfahren bereits andere Möglichkeiten hinsichtlich der Adaptivität von Fahrzeugstrukturen berücksichtigen kann, die sich bei neuen Fahrzeuggenerationen ergeben. Dies kann beispielsweise auf Fahrzeuge mit anderen Antriebskonzepten zutreffen.

Die vorliegende Erfindung schafft ein Verfahren zur Anpassung einer Auslöseinformation eines Rückhaltesystems eines Fahrzeugs mit einem adaptiven Strukturelement, das die folgenden Schritte umfasst: Empfangen einer Zustandsinformation über eine Schnittstelle, wobei die Zustandsinformation eine Information über einen Zustand des adaptiven Strukturelements aufweist; und Anpassen der Auslöseinformation, basierend auf der Zustandsinformation.

Bei der Auslöseinformation kann es sich um ein oder eine Mehrzahl von Eingangssignalen handeln, die in einem Steuergerät, vorzugsweise dem Airbagsteuergerät ausgewertet werden können. Eine Anpassung bedeutet in diesem Sinne eine Modifikation der Signale, in der Form, dass Anpassungen in Amplitude, Frequenz, Phasenlage und/oder weitere Verknüpfungen mit anderen Signalen umfasst sind. Die Anpassung lässt sich in analoger und/oder digitaler Form durchführen. Ebenfalls kann eine Anpassung im mechanischen Sinne durchgeführt werden, beispielsweise durch Zuschaltung von weiteren Sensoren und/oder mechanischen Komponenten, die zur Modifikation der zur Auswertung verwendeten Signale bereitgestellt werden. Ziel der Anpassungen ist es, die Auslösung der Rückhaltemittel bei geänderten Eingabesignalen sicherzustellen. Bei dem Zustand des adaptiven Strukturelements kann es sich um einen aktuellen Zustand des adaptiven Strukturelements oder um einen gerade einzustellenden Zustand handeln.

Die Steifigkeit des adaptiven Strukturelements ist anpassbar und die Zustandsinformation weist eine Information über die Steifigkeit des adaptiven Strukturelements auf. Somit kann beispielsweise die Auswirkung einer Steifigkeitsänderung einer Crashbox berücksichtigt werden, um die Auslösung des Rückhaltesystems bei einer Kollision zu optimieren.

Die Auslöseinformation des Rückhaltesystems kann ein Signal einer Sensorik des Fahrzeugs repräsentieren. Beispielsweise kann es sich um ein Ausgangssignal eines Beschleunigungssensors handeln, basierend auf dem eine Auslösentscheidung des Rückhaltesystems getroffen werden kann. Die Sensorik kann mehrere Sensoren umfassen. Bei dem Signal kann es sich demnach auch um eine Mehrzahl von Einzelsignalen handeln.

Dabei kann eine Signalform des Signals der Sensorik basierend auf der Zustandsinformation modifiziert werden, um die Auslöseinformation an die Zustandsinformation anzupassen. Eine Signalanpassung des Signals oder der Signale der Sensorik kann sowohl analog als auch digital durchgeführt werden. Die Anpassung kann beispielsweise eine Amplituden-, Frequenz- und/oder Phasenanpassung beinhalten. Andere bekannte Formen der Signalbeeinflussung können ebenfalls zur Anpassung eingesetzt werden. Durch die Modifikation der Signale kann der Einfluss der Veränderung der Strukturelemente kompensiert werden.

Gemäß einer Ausgestaltung kann das erfindungsgemäße Verfahren einen Schritt der Bereitstellung eines Einstellsignals an einer Schnittstelle umfassen, wobei das Einstellsignal ausgebildet sein kann, um basierend auf der Zustandsinformation eine Einstellung der Sensorik zu bewirken, um die Auslöseinformation an die Zustandsinformation anzupassen. Eine Anpassung der Sensorik und/oder der Signaldatenerfasssung kann mechanisch, elektrisch und/oder elektromechanisch stattfinden. Durch die Einstellung der Sensorik kann beispielsweise ein Sensor auf einen aktuellen Zustand eines Strukturelements eingestellt werden, so dass der Sensor bereits ein entsprechend angepasstes Sensorsignal bereitstellen kann. Darüber hinaus kann die Information über die Einstellung des Zustandes anderen Systemen zur Verfügung gestellt werden, hierdurch lassen sich auch Kombinationen von Systemen erstellen, die auf Basis dieser Information weitere Aktionen einstellen können.

Gemäß einer weiteren Ausgestaltung kann die Auslöseinformation des Rückhaltesystems ein Auslösesignal repräsentieren, das von einem Auslösealgorithmus bereitgestellt wird und es kann mindestens ein Parameter des Auslösealgorithmus basierend auf der Zustandsinformation angepasst werden, um die Auslöseinformation an die Zustandsinformation anzupassen. Somit kann der Zustand des Strukturelements beispielsweise durch Anpassung von Schwellwerten oder durch Empfindlichkeitsänderungen des Auslösealgorithmus berücksichtigt werden.

Die Zustandsinformation kann ein Ansteuersignal repräsentieren das von einer Einrichtung zum Ansteuern des Strukturelements bereitgestellt wird. Auf diese Weise ist es nicht erforderlich, den Zustand des Strukturelements separat zu erfassen. Stattdessen kann die Zustandsinformation direkt aus dem Ansteuersignal ermittelt werden, mit dem das Strukturelement eingestellt wird.

Erfindungsgemäß kann das Fahrzeug mindestens ein weiteres adaptives Strukturelement aufweisen. In diesem Fall kann mindestens eine weitere Zustandsinformation über die Schnittstelle empfangen werden, wobei die mindestens eine weitere Zustandsinformation eine Information über einen Zustand des mindestens einen weiteren adaptiven Strukturelements aufweist und es kann die Auslöseinformation basierend auf der Zustandsinformation und der mindestens einen weiteren Zustandsinformation angepasst werden. Auf diese Weise kann der aktuelle Zustand aller adaptiven Strukturelemente des Fahrzeugs bei der Auslösung der Rückhaltemittel berücksichtigt werden.

Gemäß einer weiteren Ausgestaltung kann das Fahrzeug ein aktives Fahrwerk aufweisen, und es kann eine Fahrwerksinformation über eine Schnittstelle empfangen werden und an einen Auslösealgorithmus des Rückhaltesystems bereitgestellt werden. Der Auslösealgorithmus kann beispielsweise von einem Airbagauslösesteuergerät ausgeführt werden. Somit kann bei Systemen mit aktivem Fahrwerk die Information über den momentanen Fahrwerkzustand an das Airbagauslösesteuergerät übermittelt werden. Dies ermöglicht es, im Airbagauslösesteuergerät, basierend auf der Fahrwerksinformation eine Anpassung der Fehlauslöseunterdrückung (Misuseunterdrückung) des Auslösealgorithmus durchzuführen.

Gemäß einer weiteren Ausgestaltung kann das Fahrzeug ein Fahrdynamikregelsystem aufweisen, und die Zustandsinformation kann an einen Auslösealgorithmus des Fahrdynamikregelsystems bereitgestellt werden. Ferner kann eine Fahrzustandsinformation über eine Schnittstelle empfangen werden. Der Auslösealgorithmus kann beispielsweise von einem Fahrdynamikregelsteuergerät ausgeführt werden. Erfindungsgemäß kann der Zustand des wenigstens einen adaptiven Strukturelements an den Auslösealgorithmus zur Fahrdynamikregelung bereitgestellt werden. Somit kann bei Systemen mit aktivem Bremseingriff die Information über den momentanen Zustand der adaptiven Struktur übermittelt werden. Dies ermöglicht es, im Fahrdynamikregelsteuergerät, basierend auf der Fahrzustandsinformation eine Anpassung der Regelstrategie des Bremssystems des Auslösealgorithmus durchzuführen. Somit kann das ESP Steuergerät in den erfindungsgemäßen Ansatz mit eingebunden werden. Dabei kann bei je einer Einstellung der adaptiven Struktur auch eine Anpassung der ESP Regelstrategien durchgeführt werden. Auf diese Weise kann beispielsweise künstlich bereits eine Drehung um die Hochachse erzeugt werden, wenn unterschiedliche Bremsmomente aufgebaut werden. Dadurch kann ein Eingriff durchgeführt werden, der ggf. auch einen Unfallvorhergang beeinflusst.

Die vorliegende Erfindung schafft ferner ein Steuergerät, dass ausgebildet ist, um das erfindungsgemäße Verfahren zur Anpassung einer Auslöseinformation eines Rückhaltesystems eines Fahrzeugs mit einem adaptiven Strukturelement auszuführen. Durch die Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem magnetischen Speicher wie beispielsweise einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:
- Fig. 1: eine Darstellung von Beschleunigungsverläufen an einer Barriere;
- Fig. 2: eine Darstellung von Beschleunigungsverläufen an einem Steuergerät eines Fahrzeugs;
- Fig. 3: ein Ablaufdiagramm eines erfindungsgemäßen Verfahrens, gemäß einem Ausführungsbeispiel der Erfindung; und
- Fig. 4: ein Blockschaltbild eines erfindungsgemäßen Systems, gemäß einem weiteren Ausführungsbeispiel der Erfindung.

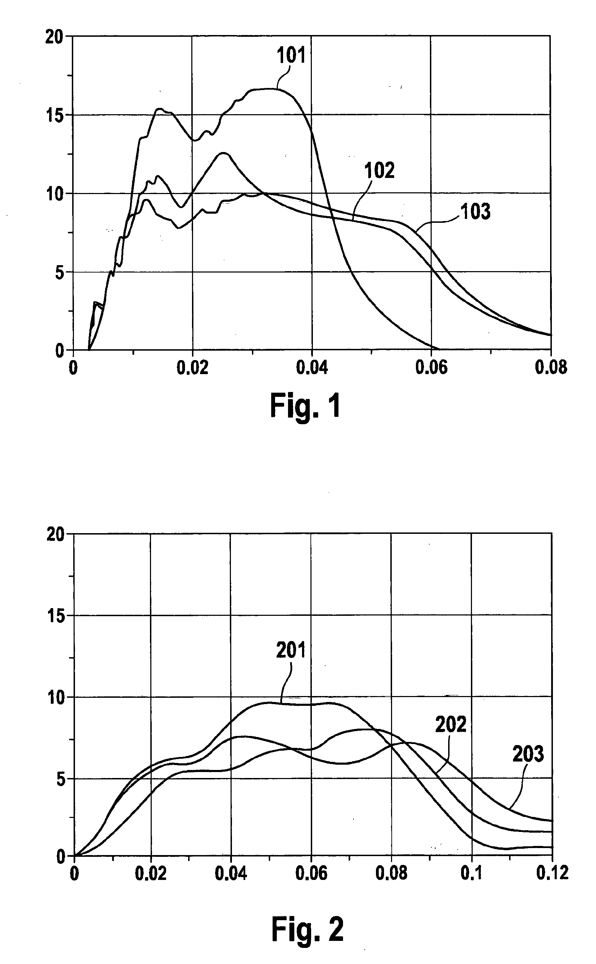

Fig. 1 zeigt zeitliche Verläufe simulierter Beschleunigungen, die bei einer Kollision eines Fahrzeugs mit einer Barriere, an der Barriere gemessen werden können. Auf der Abszisse ist die Zeit in Sekunden und auf der Ordinate ist die Beschleunigung [g] aufgetragen.

Es sind drei unterschiedliche Beschleunigungsverläufe 101, 102, 103 gezeigt, die bei unterschiedlichen Steifigkeiten einer Crashbox des Fahrzeugs, unterschiedlichen Offsetts sowie bei einer Kollisionsgeschwindigkeit von 16km/h aufgenommen sind. Die Beschleunigungswerte an der Barriere spiegeln den Einfluss der Crashbox wider. Der Beschleunigungsverlauf 101 entspricht einer hohen Steifigkeit der Crashbox. Aus dem Beschleunigungsverlauf 101 ist eine erhöhte Beschleunigung der Barriere ersichtlich. Der Beschleunigungsverlauf 102 entspricht einer geringen Steifigkeit der Crashbox und gleichem Offset. Hierbei fällt die Beschleunigung geringer aus. Der Unterschied in der Beschleunigung beträgt rund 5g. Der Beschleunigungsverlauf 103 entspricht der hohen Steifigkeit der Crashbox bei 50% Offset.

Die Anpassung der Steifigkeit lässt darauf schließen, dass ein verändertes Beschleunigungssignal am Airbagsteuergerät gemessen wird.

Fig. 2 zeigt die Ergebnisse bzw. die Beschleunigung, die ein zentrales Airbag-Steuergerät bei den in Fig. 1 beschriebenen Fällen messen dürfte. Zur Aufnahme der Messwerte ist ein Messelement an die Position des zentralen Airbagsteuergerätes angeordnet worden.

Gezeigt sind wiederum drei Beschleunigungsverläufe 201, 202, 203, die die gemessenen Beschleunigungswerte am Steuergerät für die an Hand von Fig. 1 beschriebenen Fälle darstellen. Der Beschleunigungsverlauf 201 entspricht der Beschleunigung bei der hohen Steifigkeit der Crashbox, der Beschleunigungsverlauf 202 entspricht der Beschleunigung bei der geringen Steifigkeit der Crashbox und gleichem Offset. Der Beschleunigungsverlauf 203 ist bei der hohen Steifigkeit der Crashbox und bei 50% Offset aufgenommen.

Wie erwartet zeigt sich, bei gleichem Offset aber unterschiedlichen Steifigkeiten der Crashbox ein anderer Signalverlauf. Die Unterschiede im Signalverlauf können erfindungsgemäß bei der Ansteuerung der Rückhaltemittel berücksichtigt werden.

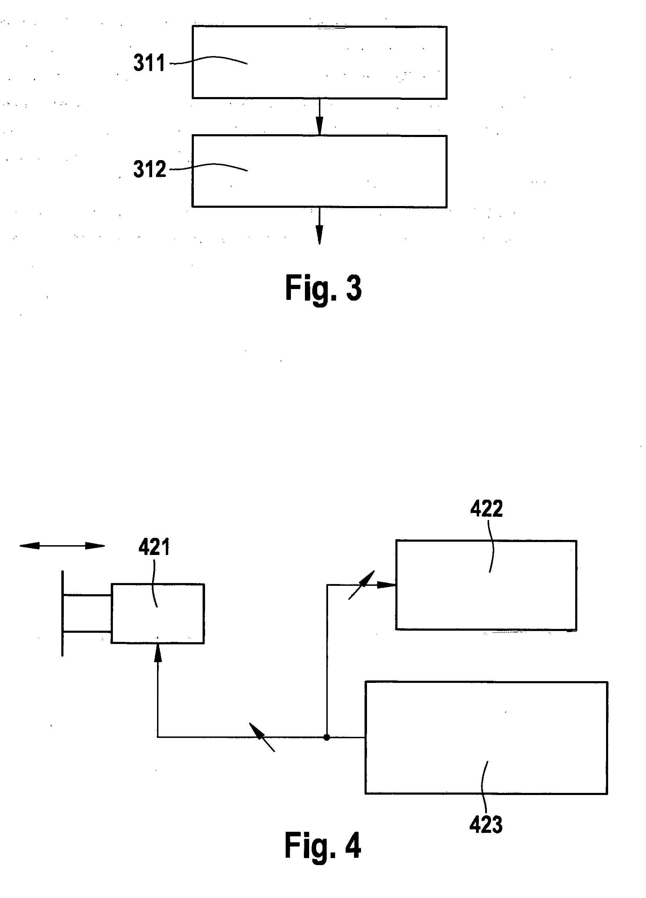

Fig. 3 zeigt ein Ablaufdiagramm eines Verfahrens zur Anpassung einer Auslöseinformation eines Rückhaltesystems eines Fahrzeugs, das ein oder eine Mehrzahl adaptiver Strukturelemente aufweist. Bei den adaptiven Strukturelementen kann es sich um Crashboxen handeln. In einem ersten Schritt 311 kann eine Zustandsinformation empfangen werden, die eine Information über einen Zustand des oder der adaptiven Strukturelemente aufweist. Beispielsweise kann die Zustandsinformation die in den Figuren 1 und 2 beschriebenen unterschiedlichen Steifigkeiten der Crashbox anzeigen. In einem zweiten Schritt kann die Auslöseinformation basierend auf der Zustandsinformation angepasst werden. Auf diese Weise kann der Einfluss der veränderten Steifigkeit auf die von einem Sensor gemessenen Signale beispielsweise einem Beschleunigungssensor bei der Auswertung der Signale kompensiert werden. Anschließend kann die angepasste Auslöseinformation eingesetzt werden, um eine Entscheidung über die Auslösung von Rückhaltemitteln zu treffen.

Die Auslöseinformation kann im Schritt 312 angepasst werden, indem für die Ansteuerung von Rückhaltemitteln auszuwertende Signale modifiziert werden. Alternativ oder zusätzlich können auch Sensoren angepasst werden, die die auszuwertenden Signale bereitstellen. Ferner kann im Schritt 312 ein Auslösealgorithmus angepasst werden, der die auszuwertenden Signale verarbeitet, um eine Auslöseentscheidung zu treffen.

Die Anpassung kann gemäß einer Anpassungsvorschrift erfolgen. Die Anpassungsvorschrift kann beispielsweise auf einer Nachschlagetabelle basieren, in der unterschiedlichen Zuständen der Strukturelemente entsprechende Anpassungswerte zugeordnet sein können. Alternativ können die jeweiligen Anpassungswerte abhängig von den aktuellen Zuständen der Strukturelemente berechnet werden.

Fig. 4 zeigt ein Blockschaltbild eines Systems zum Ausführen des erfindungsgemäßen Verfahrens, gemäß einem Ausführungsbeispiel der vorliegenden Erfindung. Gezeigt ist eine adaptive Crashbox 421, ein Steuergerät 422 und eine Steuerung oder Regelung 423.

Die Steuerung 423 ist ausgebildet, um ein Ansteuersignal an die adaptive Crashbox 421 bereitzustellen. Die adaptive Crashbox 421 kann eine entsprechende Aktorik aufweisen, mit der die Steifigkeit der adaptiven Crashbox 421 angepasst werden kann. Bei dem Steuergerät 422 kann es sich um ein Airbag-Steuergerät handeln. Das Steuergerät 422 ist ausgebildet, um das Ansteuersignal von der Steuerung 423 zu empfangen. Das Steuergerät 422 kann basierend auf dem Ansteuersignal eine Anpassung der Auslösung von reversiblen und/oder irrreversiblen Rückhaltemittel wie beispielsweise des Airbags oder des Gurtstraffers vornehmen.

Somit kann ein zusätzliches Steuer- oder Regelsignal, das eine Ansteuerung der adaptiven Crashbox 421 vor, während und/oder nach einer Kollision ansteuert, zusätzlich an das Steuergerät 422 übermittelt werden. Das Steuergerät 422 kann daraufhin eine Anpassung von intern gemessenen Sensorsignalen, peripheren Sensorsignalen und/oder von einem BUS-System eingelesenen Signalen modifizieren. Somit lässt sich eine Verbesserung des Insassenschutzes durch Berücksichtigung adaptiver Komponenten 421 in der Signalverarbeitung und Signalauswertung erzielen.

Darüber hinaus ist es dem Fachmann klar, dass die Steuer- oder Regelung 423 im Steuergerät 422 oder in der adaptiven Crashbox 421 oder in einem anderen nicht näher dargestellten Steuergerät ausgebildet sein kann.

## Patentansprüche

1. Verfahren zur Anpassung einer Auslöseinformation eines Rückhaltesystems eines Fahrzeugs mit einem adaptiven Strukturelement (421), wobei eine Steifigkeit des adaptiven Strukturelements anpassbar ist, das die folgenden Schritte umfasst:
Empfangen (311) einer Zustandsinformation über eine Schnittstelle, wobei die Zustandsinformation eine Information über die Steifigkeit des adaptiven Strukturelements aufweist;
Anpassen (312) der Auslöseinformation, basierend auf der Zustandsinformation.

2. Verfahren gemäß einem der vorangegangenen Ansprüche, bei dem die Auslöseinformation des Rückhaltesystems ein Signal einer Sensorik des Fahrzeugs repräsentiert.

3. Verfahren gemäß Anspruch 2, bei dem eine Signalform des Signals der Sensorik basierend auf der Zustandsinformation modifiziert wird, um die Auslöseinformation an die Zustandsinformation anzupassen.

4. Verfahren gemäß einem der Ansprüche 2 oder 3, mit einem Schritt der Bereitstellung eines Einstellsignals an einer Schnittstelle, wobei das Einstellsignal ausgebildet ist, um basierend auf der Zustandsinformation eine Einstellung der Sensorik zu bewirken, um die Auslöseinformation an die Zustandsinformation anzupassen.

5. Verfahren gemäß einem der vorangegangenen Ansprüche, bei dem die Auslöseinformation des Rückhaltesystems ein Auslösesignal repräsentiert, das von einem Auslösealgorithmus bereitgestellt wird und bei dem mindestens ein Parameter des Auslösealgorithmus basierend auf der Zustandsinformation angepasst wird, um die Auslöseinformation an die Zustandsinformation anzupassen.

6. Verfahren gemäß einem der vorangegangenen Ansprüche, bei dem die Zustandsinformation ein Ansteuersignal repräsentiert, das von einer Einrichtung (423) zum Ansteuern des Strukturelements bereitgestellt wird.

7. Verfahren gemäß einem der vorangegangenen Ansprüche, bei dem das Fahrzeug mindestes ein weiteres adaptives Strukturelement aufweist und bei dem mindestens eine weitere Zustandsinformation über die Schnittstelle empfangen wird, wobei die mindestens eine weitere Zustandsinformation eine Information über einen Zustand des mindestens einen weiteren adaptiven Strukturelements aufweist und bei dem die Auslöseinformation basierend auf der Zustandsinformation und der mindestens einen weiteren Zustandsinformation angepasst wird.

8. Verfahren gemäß einem der vorangegangenen Ansprüche, bei dem das Fahrzeug ein aktives Fahrwerk aufweist, und eine Fahrwerksinformation über eine Schnittstelle empfangen wird und an einen Auslösealgorithmus des Rückhaltesystems bereitgestellt wird.

9. Verfahren gemäß einem der vorangegangenen Ansprüche, bei dem das Fahrzeug ein Fahrdynamikregelsystem aufweist, und die Zustandsinformation an einen Auslösealgorithmus des Fahrdynamikregelsystems bereitgestellt wird.

10. Steuergerät, um alle Schritte eines Verfahrens gemäß einem der Ansprüche 1 bis 9 durchzuführen.

11. Computerprogrammprodukt mit Programmcode, der auf einem maschinenlesbaren Träger gespeichert ist, zur Durchführung des Verfahrens nach einem der Ansprüche 1 bis 9, wenn das Programm auf einem Steuergerät ausgeführt wird.

## Claims

1. Method for adapting an item of trigger information from a restraint system of a vehicle with an adaptive structural element (421), a stiffness of the adaptive structural element being able to be adapted, which method comprises the following steps of:
receiving (311) an item of state information via an interface, the state information having an item of information relating to the stiffness of the adaptive structural element;
adapting (312) the trigger information on the basis of the state information.

2. Method according to Claim 1, in which the trigger information from the restraint system represents a signal from a sensor system of the vehicle.

3. Method according to Claim 2, in which a signal waveform of the signal from the sensor system is modified on the basis of the state information in order to adapt the trigger information to the state information.

4. Method according to either of Claims 2 and 3, having a step of providing a setting signal at an interface, the setting signal being designed to set the sensor system on the basis of the state information in order to adapt the trigger information to the state information.

5. Method according to one of the preceding claims, in which the trigger information from the restraint system represents a trigger signal which is provided by a trigger algorithm, and in which at least one parameter of the trigger algorithm is adapted on the basis of the state information in order to adapt the trigger information to the state information.

6. Method according to one of the preceding claims, in which the state information represents a control signal which is provided by a device (423) for controlling the structural element.

7. Method according to one of the preceding claims, in which the vehicle has at least one further adaptive structural element, and in which at least one further item of state information is received via the interface, the at least one further item of state information having an item of information relating to a state of the at least one further adaptive structural element, and in which the trigger information is adapted on the basis of the state information and the at least one further item of state information.

8. Method according to one of the preceding claims, in which the vehicle has an active chassis and an item of chassis information is received via an interface and is made available to a trigger algorithm of the restraint system.

9. Method according to one of the preceding claims, in which the vehicle has a driving dynamics control system and the state information is made available to a trigger algorithm of the driving dynamics control system.

10. Control device for carrying out all steps of a method according to one of Claims 1 to 9.

11. Computer program product with program code stored on a machine-readable carrier for carrying out the method according to one of Claims 1 to 9 when the program is executed on a control device.

## Revendications

1. Procédé pour adapter une information de déclenchement d'un système de retenue d'un véhicule comprenant un élément structurel adaptatif (421), une rigidité de l'élément structurel adaptatif étant adaptable, comprenant les étapes suivantes :
réception (311) d'une information d'état par le biais d'une interface, l'information d'état présentant une information sur la rigidité de l'élément structurel adaptatif ;
adaptation (312) de l'information de déclenchement en se basant sur l'information d'état.

2. Procédé selon la revendication 1, selon lequel l'information de déclenchement du système de retenue représente un signal d'un dispositif de détection du véhicule.

3. Procédé selon la revendication 2, selon lequel la forme du signal du dispositif de détection est modifiée en se basant sur l'information d'état afin d'adapter l'information de déclenchement à l'information d'état.

4. Procédé selon l'une des revendications 2 ou 3, comprenant une étape de délivrance d'un signal de réglage sur une interface, le signal de réglage étant configuré pour, en se basant sur l'information d'état, provoquer un réglage du dispositif de détection afin d'adapter l'information de déclenchement à l'information d'état.

5. Procédé selon l'une des revendications précédentes, selon lequel l'information de déclenchement du système de retenue représente un signal de déclenchement qui est délivré par un algorithme de déclenchement et selon lequel au moins un paramètre de l'algorithme de déclenchement est adapté en se basant sur l'information d'état afin d'adapter l'information de déclenchement à l'information d'état.

6. Procédé selon l'une des revendications précédentes, selon lequel l'information d'état représente un signal de commande qui est délivré par un dispositif (423) pour commander l'élément structurel.

7. Procédé selon l'une des revendications précédentes, selon lequel le véhicule présente au moins un élément structurel adaptatif supplémentaire et selon lequel au moins une information d'état supplémentaire est reçue par le biais de l'interface, l'au moins une information d'état supplémentaire présentant une information sur un état de l'au moins un élément structurel adaptatif supplémentaire, et selon lequel l'information de déclenchement est adaptée en se basant sur l'information d'état et l'au moins une information d'état supplémentaire.

8. Procédé selon l'une des revendications précédentes, selon lequel le véhicule présente un train roulant actif et une information de train roulant est reçue par le biais d'une interface et délivrée à un algorithme de déclenchement du système de retenue.

9. Procédé selon l'une des revendications précédentes, selon lequel le véhicule présente un système de régulation dynamique de la conduite et l'information d'état est délivrée à un algorithme de déclenchement du système de régulation dynamique de la conduite.

10. Contrôleur pour exécuter toutes les étapes d'un procédé selon l'une des revendications 1 à 9.

11. Programme informatique comprenant un code de programme, lequel est enregistré sur un support lisible par machine, pour mettre en oeuvre le procédé selon l'une des revendications 1 à 9 lorsque le programme est exécuté sur un contrôleur.
